# EUROPÄISCHE PATENTANMELDUNG

(11) **EP 4 741 696 A1**
(43) Veröffentlichungstag der Anmeldung: **13.05.2026**
(21) Anmeldenummer: 24212470.9
(22) Anmeldetag: 12.11.2024
(51) Int. Cl.: F16L 41/00, F16L 47/32

(54) **INSTALLATIONSFITTING**

(71) Anmelder: Georg Fischer Rohrleitungssysteme AG, 8201 Schaffhausen (CH)
(72) Erfinder: Graf, Marcel, 8212 Neuhausen am Rheinfall (CH); Rösch, Jürgen, 79853 Lenzkirch (DE); Brugger, Florian, 78166 Donaueschingen (DE); Schiefer, Christian, 79790 Rheinheim (DE); Atzenhofer, Katja, 8046 Zürich (CH)
(74) Vertreter: Fenner, Seraina

(57) **Zusammenfassung**

Fitting (1) zur Installation von einschraubbaren Anschlüssen (6) vorzugsweise Sensoren mit Gewinden in einer Rohrleitung, beinhaltend einen Aussendurchmesser (2), einen Innendurchmesser (3), eine Länge (4) und eine Längsachse (5), wobei das Fitting (1) aus Kunststoff ist und als Spritzgussteil ausgebildet ist, wobei am Aussenumfang (2) mehrere Augen (7) angeordnet sind, wobei die Augen (7) jeweils eine Mittelachse (8) aufweisen, die senkrecht auf die Längsachse (5) gerichtet ist.

## Beschreibung

Die Erfindung betrifft ein Fitting zur Installation von einschraubbaren Anschlüssen vorzugsweise Sensoren mit Gewinden in einer Rohrleitung beinhaltend, einen Aussendurchmesser, einen Innendurchmesser, eine Länge und eine Längsachse, wobei das Fitting aus Kunststoff ist und als Spritzgussteil ausgebildet ist.

Zum Anbringen von Sensoren mit Gewinden in einer Rohrleitung wird meist eine Bohrung in die bestehende Rohrleitung eingebracht, in die ein abgehender Stutzen eingefügt wird über den ein Sensor direkten Zugang zum Medium erhält. Nachteilig ist dabei, dass das Anbringen solcher abgehender Stutzen bei dünnwandigen Rohren meist nicht möglich ist und deshalb in der Regel ein Fitting in die bestehende Rohrleitung eingebaut wird, das eine Wandstärkenverdickung aufweist, die ein Anbringen eines abgehenden Stutzens zulässt.

In der DE 10 2013 015 038 A1 wird ein Messrohr für ein Durchflussmessgerät offenbart, bei dem das Abzweigrohr an die Rohrleitung gefügt wird. Nachteilig dabei ist, dass die Rohrleitung eine gewisse Wandstärke aufweisen muss, damit das Abzweigrohr stabil angebracht werden kann.

Das Gebrauchsmuster DE 20 2005 013 904 U1 offenbart ein Rohr mit Sensoradapter, der mittels eines Bajonettverschlusses am Rohr befestigt wird, in welchem dann ein Sensor aufgenommen wird. Nachteilig hierbei ist, dass ausschliesslich ein Sensoradapter an einer Position des Rohres angeordnet werden kann und keine weiteren Sensoren auf derselben Länge der Rohrleitung entlang des Rohrumfangs angeordnet werden können.

Es ist Aufgabe der Erfindung ein Fitting vorzusehen, das ermöglicht mehrere Anschlüsse für z. B. Sensoren an einer Stelle bzw. auf einer Länge der Rohrleitung anzubringen, welche zudem einfach und präzise am Fitting montierbar sind.

Diese Aufgabe wird erfindungsgemäss dadurch gelöst, dass am Aussenumfang mehrere Augen angeordnet sind, wobei die Augen jeweils eine Mittelachse aufweisen, die senkrecht auf die Längsachse gerichtet ist.

Das erfindungsgemässe Fitting zur Installation von Anschlüssen vorzugsweise Sensoren in einer Rohrleitung beinhaltet, einen Aussendurchmesser, einen Innendurchmesser, eine Länge und eine Längsachse. Das Fitting ist aus Kunststoff hergestellt und als Spritzgussteil ausgebildet, dies erlaubt die Herstellung hoher Stückzahlen. Am Aussenumfang sind mehrere Augen angeordnet, wobei die Augen jeweils eine Mittelachse aufweisen, die senkrecht auf die Längsachse gerichtet ist. Die Augen dienen der Aufnahme von Anschlüssen vorzugsweise Sensoren, welche dann in die Rohrleitung hineinragen und die gewünschten Eigenschaften des Mediums messen.

Es ist vorteilhaft, wenn die Augen eine runde, rechtwinklig zur Mittelachse angeordnete Grundfläche aufweisen. Dies ermöglicht dem einschraubbaren Anschluss bzw. dem Sensor eine gute Auflagefläche. Es ist vorteilhaft, wenn alle Augen am Fitting dieselben Abmasse aufweisen.

Es ist vorteilhaft, wenn sich die Augen zylindrisch oder konisch entlang der Mittelachse erstrecken. Die Augen überragen den Aussendurchmesser des Fittings.

Vorzugsweise weisen die Augen eine zentrische Bohrung auf. Die Bohrung ist vorzugsweise als Sackloch ausgebildet und ragt nicht durch die Wandung des Fittings durch. Vorzugsweise dient eine Körnung am Grund des Sackloches als Vorzentrierung, mittels der beim Einsatz eines Anschlusses oder Sensors die Bohrung noch ganz durchgebohrt und der Anschluss oder der Sensor darin angeordnet wird.

Als bevorzugt hat sich gezeigt, wenn mehr als zwei Augen am Fitting angeordnet sind. Was den Vorteil mit sich bringt, dass nur ein Fitting in die Rohrleitung eingebaut werden muss und gleich mehrere Sensoranschlussmöglichkeiten vorhanden sind.

Es ist vorteilhaft, wenn vier Augen regelmässig verteilt am Aussenumfang angeordnet sind. Das heisst, dass die Augen vorzugsweise jeweils 90° voneinander um die Längsachse bzw. den Aussenumfang versetzt angeordnet sind und auf derselben Höhe der Längsachse des Fittings angeordnet liegen.

Als vorteilhaft hat sich gezeigt, wenn die Augen in einer Ebene rechtwinklig zur Längsachse liegen. Dies ermöglicht bei beengten Platzverhältnissen einen Einbau von mehreren vorzugsweise vier Sensoren.

Vorzugsweise ist am Aussenumfang zwischen den Augen ein rundum verlaufender Steg angeordnet. Dieser dient der Stabilisierung der Augen am Fitting.

Als bevorzugt hat sich gezeigt, wenn das Fitting aus einem der Kunststoffe PEEK, PVDF, ECTFE, PVC, PP, PE oder Peek hergestellt ist.

Es ist vorteilhaft, wenn die Augen in der Mitte der Länge des Fittings angeordnet sind. Dies gewährleistet den bestmöglichen Zugang zur Montage der Anschlüsse oder Sensoren wenn das Fitting in die Rohrleitung eingebaut ist.

Alle Ausgestaltungmöglichkeiten sind untereinander frei kombinierbar.

Ein Ausführungsbeispiel der Erfindung wird anhand der Figuren beschrieben, wobei sich die Erfindung nicht nur auf das Ausführungsbeispiel beschränkt. Es zeigen:
Fig. 1 ein dreidimensional dargestelltes erfindungsgemässes Fitting,
Fig. 2 einen Längsschnitt durch ein erfindungsgemässes Fitting.
Fig. 3 eine Seitenansicht eines erfindungsgemässen Fittings mit eingebautem Sensor.

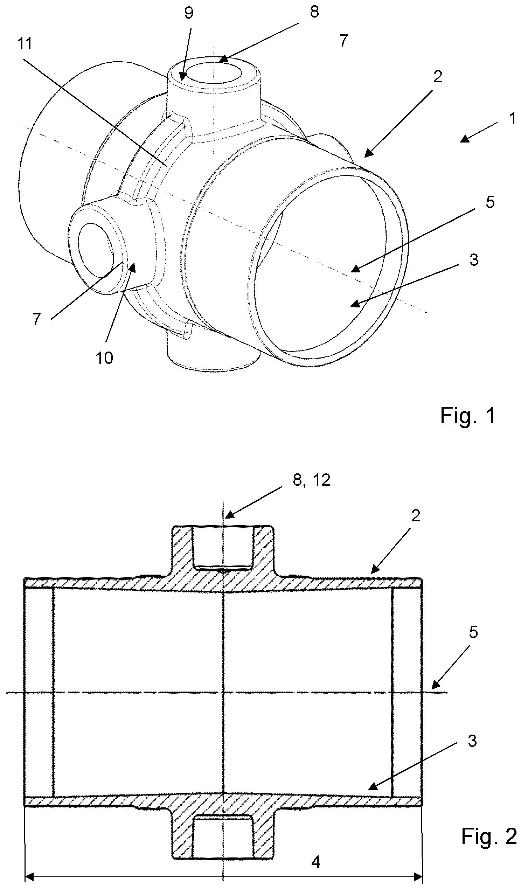

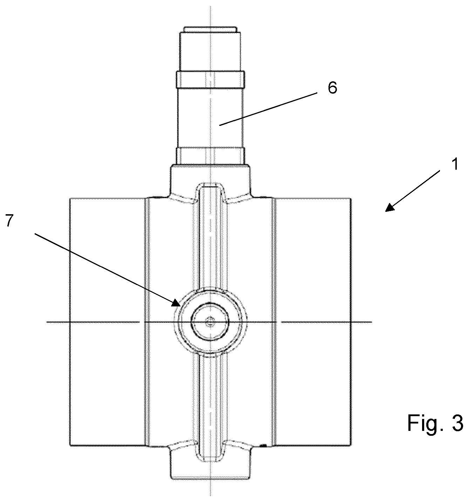

Die in Fig. 1 dargestellte Zeichnung zeigt ein erfindungsgemässes Fitting 1 zur Installation von Sensoren 6 in einer Rohrleitung. Das Fitting 1 weist einen Aussendurchmesser 2, einen Innendurchmesser 3 und eine Länge 4 auf. Am Aussendurchmesser 2 sind mehrere Augen 7 zur Sensoraufnahme 6 angeordnet. Die Mittelachsen 8 der Augen 7 sind senkrecht auf die Längsachse 5 gerichtet. Die Augen 7 des Fittings 1 weisen vorzugsweise eine runde Grundfläche 9 auf, wobei die Grundfläche 9 horizontal zur Mittelachse 8 des Auges 7 angeordnet ist. Die Grundfläche 9 gewährleistet eine ebene Auflagefläche für den Sensor 6, was aus Fig. 3 gut erkennbar ist. Es ist vorteilhaft, wenn vier Augen 7 am Aussenumfang des Fittings 1 angeordnet sind. Dies gibt die Möglichkeit auch bei beengten Platzverhältnissen vier Sensoren 6 einbauen zu können. Zudem hat es den Vorteil, dass nur ein Fitting 1 in eine Rohrleitung eingebaut werden muss um vier Sensoren 6 an der Rohrleitung vorzusehen. Die Augen 7 weisen vorzugsweise eine zylindrische oder konische Form auf bzw. erstecken sich entlang der Mittelachse 8 zylindrisch oder konisch und ragen über den Aussendurchmesser des Fittings 1 hinaus. Es ist vorteilhaft, wenn im Auge 7 eine entlang der Mittelachse 8 verlaufende Bohrung 10 angeordnet ist. Wobei eine Körnung am Grund der Sacklochbohrung der Vorzentrierung für das anschliessende Aufbohren zur Aufnahme eines Sensors 6 im Auge 7. Die Bohrung 10 ist somit nur als Sacklochbohrung ausgebildet und wird dann durchgehend aufgebohrt, wenn ein Sensor 6 darin angeordnet wird, ansonsten bleibt die Bohrung 10 als Sackloch ohne Zugang zum Medium. Es ist vorteilhaft, wenn die Augen 10 in regelmässigen Abständen um den Aussenumfang verteilt angeordnet sind, das heisst im Falle von vier Augen 7 am Fitting 1, dass die Augen 7 jeweils 90° versetzt um die Längsachse 5 angeordnet sind. Ebenso ist es vorteilhaft, wenn alle Augen 7 in einer Ebene zur Längsachse angeordnet sind, bzw. auf derselben Höhe der Längsachse 5, vorzugsweise in der Mitte der Länge des Fittings 1. Um die Stabilität der Augen 7 zu erhöhen, verläuft zwischen den Augen 7 eine Steg 11 entlang des Aussenumfangs. Dies gewährleistet auch bei einem dünnwandigen Fitting 1 das die Augen 7 stabil am Fitting 1 angeordnet sind.

### Bezugszeichenliste

- 1: Fitting
- 2: Aussendurchmesser
- 3: Innendurchmesser
- 4: Länge
- 5: Längsachse
- 6: Anschluss oder Sensor
- 7: Auge
- 8: Mittelachse
- 9: Grundfläche
- 10: Sacklochbohrung
- 11: Steg

## Patentansprüche

1. Fitting (1) zur Installation von einschraubbaren Anschlüssen (6), vorzugsweise Sensoren mit Gewinden, in einer Rohrleitung beinhaltend, einen Aussendurchmesser (2), einen Innendurchmesser (3), eine Länge (4) und eine Längsachse (5), wobei das Fitting (1) aus Kunststoff ist und als Spritzgussteil ausgebildet ist, **dadurch gekennzeichnet, dass** am Aussenumfang (2) mehrere Augen (7) angeordnet sind, wobei die Augen (7) jeweils eine Mittelachse (8) aufweisen, die senkrecht auf die Längsachse (5) gerichtet ist.

2. Fitting (1) nach Anspruch 1, **dadurch gekennzeichnet, dass** die Augen (7) eine runde, rechtwinklig zur Mittelachse (5) angeordnete Grundfläche (9)aufweisen.

3. Fitting (1) nach Anspruch 1 oder 2, **dadurch gekennzeichnet, dass** sich das Auge (7) jeweils zylindrisch oder konisch entlang der Mittelachse (8) erstreckt.

4. Fitting (1) nach einem der Ansprüche 1 oder 3, **dadurch gekennzeichnet, dass** die Augen (7) eine zentrische Sacklochbohrung (10) aufweisen.

5. Fitting (1) nach einem der Ansprüche 1 bis 4, **dadurch gekennzeichnet, dass** mehr als zwei Augen (7) am Fitting (1) angeordnet sind.

6. Fitting (1) nach einem der Ansprüche 1 bis 5, **dadurch gekennzeichnet, dass** vier Augen (7) regelmässig verteilt am Aussenumfang angeordnet sind.

7. Fitting (1) nach einem der Ansprüche 1 bis 6, **dadurch gekennzeichnet, dass** die Augen (7) auf einer Ebene rechtwinklig zur Längsachse (5) liegen.

8. Fitting (1) nach einem der Ansprüche 1 bis 7, **dadurch gekennzeichnet**, ein am Aussenumfang (2) zwischen den Augen (7) verlaufender Steg angeordnet ist.

9. Fitting (1) nach einem der Ansprüche 1 bis 8, **dadurch gekennzeichnet, dass** das Fitting (1) aus einem der Kunststoffe PEEK, PVDF, ECTFE, PVC, PP, PE oder Peek hergestellt ist.

10. Fitting (1) nach einem der Ansprüche 1 bis 9, **dadurch gekennzeichnet, dass** die Augen (7) in der Mitte der Länge (4) des Fittings (1) angeordnet sind.
